# EUROPEAN PATENT APPLICATION

(11) **EP 3 950 178 A1**
(43) Date of publication of application: **09.02.2022**
(21) Application number: 20189634.7
(22) Date of filing: 05.08.2020
(51) Int. Cl.: B22F 3/00, B22F 3/105, B29C 64/00, B33Y 10/00, B33Y 30/00, B33Y 40/20, B29C 64/245, B29C 64/40

(54) **A BUILD PLATE FOR AN ADDITIVE MANUFACTURING DEVICE**

(71) Applicant: Siemens Aktiengesellschaft, 80333 München (DE)
(72) Inventor: Ceriani, Nicola Maria, 91056 Erlangen (DE); Schneider, Heinz-Ingo, 85598 Baldham (DE); Sinn, Christof, 90571 Schwaig (DE)

(57) **Abstract**

The current disclosure describes an additive manufacturing method for manufacturing a first object. The method comprises providing a build plate for supporting the first object on a first surface of the build plate, building the first object on the first surface of the build plate using a first additive technique in a build phase, and operating a movement mechanism of the build plate at the completion of the build phase. The build plate comprises a plurality of sections and the movement mechanism mechanically coupled to the plurality of sections. The plurality of sections are in a first configuration during a build phase. Building the first object comprises depositing at least one material on a build zone of a section from the plurality of sections of the build plate. The movement mechanism is for arranging the plurality of sections from the first configuration to a second configuration.

## Description

### Background

The current disclosure relates to additive manufacturing and more particularly to build plates of additive manufacturing devices. Build plates provide support for the objects being manufactured or printed by additive manufacturing and act as a base on which the additive manufacturing process is carried out.

### Description

Additive manufacturing techniques produce objects by depositing print material in layers. The process of depositing and layering is carried out on top of a build plate. Usually, during this process, the print material often bonds or fuses to the surface of the build plate. Accordingly, when the additive manufacturing process is completed, the 3D printed object is attached to the build plate. Thus, in order to proceed with finishing of the object, the object has to be detached from the build plate. This removal or detachment operation is often tedious, time consuming and is not cost effective.

Conventionally, one approach to remove the printed object from build plate is to use tools such as hammer and chisel, band saw, etc. However, this approach is often time consuming and not very accurate. In another approach, this removal could be performed using electrical discharges. This is also known as Electrical Discharge Machining (EDM). While this approach has higher geometrical accuracy than cutting tools such as saws, it is also time consuming. Accordingly, there is a need for a build plate and a method which can remove the printed object from the build plate without substantial effort, costs and time.

Accordingly, the current disclosure describes methods accordingly to claims 1 and 11, an additive manufacturing apparatus according to claim 7 and build plate according to claim 10 which address the above-mentioned aspects.

Accordingly, the current disclosure describes an additive manufacturing method for manufacturing a first object. The method comprises providing a build plate for supporting the first object on a first surface of the build plate, building the first object on the first surface of the build plate using a first additive technique in a build phase, and operating a movement mechanism of the build plate at the completion of the build phase. The build plate comprises a plurality of sections and the movement mechanism mechanically coupled to the plurality of sections. The plurality of sections are in a first configuration during a build phase. Building the first object comprises depositing at least one material on a build zone of a section from the plurality of sections of the build plate. The movement mechanism is for arranging the plurality of sections from the first configuration to a second configuration.

Accordingly, the current disclosure describes a build plate which facilitates easy removal of the printed object from the build plate. Since the build plate is composed of a plurality of sections, displacement of the sections creating relative movement between them, generates mechanical stress on the bond or the fusion between the build plate and the printed object. This stress causes the breaking of the bond, allowing for easy detachment of the object from the build plate.

In an example, the plurality of sections comprises a first section and a second section. A first end of the first section abuts a second end of the second section in the first configuration. An area of the first section abutting the second section in the first configuration is greater than an area of the first section abutting the second section in the second configuration. Accordingly, by changing the area of the first section abutting the second section, mechanical stress is created on the first object affixed to the first surface of the build plate. In another example, this stress is generated by displacing the first section in a first direction and by displacing the second section in a direction opposite to the first direction.

In an example, each section from the plurality of sections comprises the build zone and one or more non-build zones. Each non-build zone from the one or more non-build zones, is adjacent to a neighboring section abutting the section in the first configuration. Based on the material being deposited, the material of the build plate and the temperature of the printing process, the junction of two adjacent sections may be susceptible to fusion. Accordingly, a predefined area about the junction is a non-build zone where no print material is directly deposited.

In an example the movement mechanism is one of a scissors mechanism, telescopic mechanism, sliding mechanism, and a cam mechanism. Accordingly, a plurality of mechanisms may be used to displace the sections of the build plate.

In another aspect, the current disclosure describes an additive manufacturing apparatus. The additive manufacturing apparatus comprises a build plate for supporting one or more objects on a first surface. The build plate comprises a plurality of sections capable of being arranged in one of a first configuration and a second configuration, the plurality of sections comprising a first section and a second section, an end of the first section abutting an end of the second section in the first configuration; and a movement mechanism mechanically coupled to the plurality of sections, for arranging the plurality of section in one of the first configuration and the second configuration. An area of the first section abutting the second section in the first configuration is greater than an area of the first section abutting the second section in the second configuration.

In an example, the movement mechanism is capable of arranging the first and second sections from the first configuration to the second configuration by displacing the first section in a first direction and by displacing the second section in a direction opposite to the first direction.

In yet another aspect, the current disclosure describes a build plate. The build plate comprises a plurality of sections capable of being arranged in one of a first configuration and a second configuration, the plurality of sections comprising a first section and a second section, an end of the first section abutting an end of the second section in the first configuration; and a movement mechanism mechanically coupled to the plurality of sections, for arranging the plurality of section in one of the first configuration and the second configuration. An area of the first section abutting the second section in a first configuration is greater than an area of the first section abutting the second section in the second configuration.

In yet another aspect, the current disclosure describes a method of removing a first object from a build plate of an additive manufacturing apparatus. The build plate comprises a plurality of sections capable of being arranged in one of a first configuration and a second configuration, and a movement mechanism mechanically coupled to the plurality of sections. The method comprises determining a completion of a build phase, wherein build phase comprises depositing at least one material on a build zone of a section from the plurality of sections of the build plate; and operating the movement mechanism at the completion of the build phase, for arranging the plurality of sections from the first configuration to the second configuration. The plurality of sections comprises a first section and a second section, an end of the first section abutting an end of the second section in the first configuration.

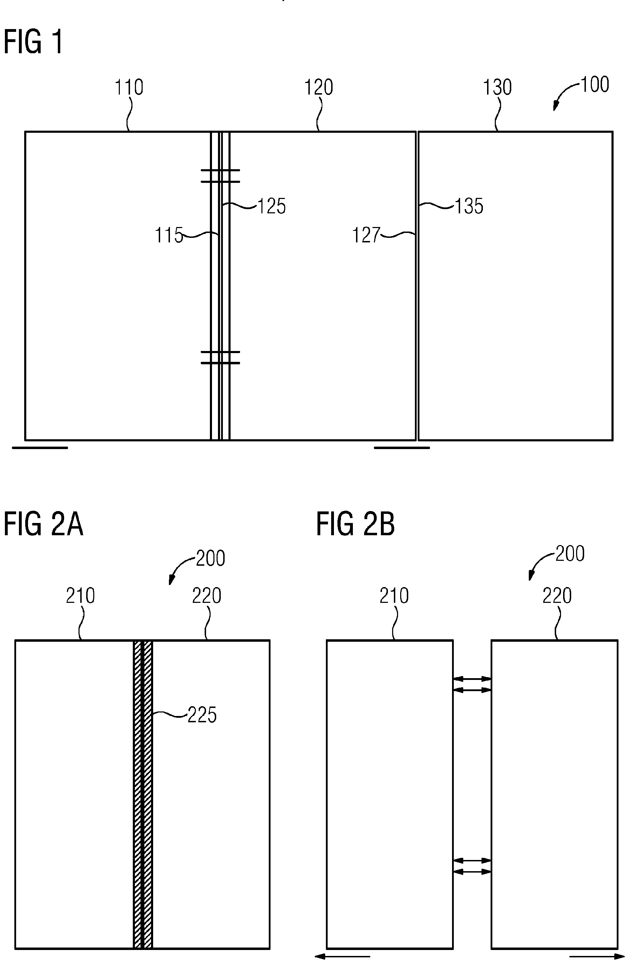

In an example, operating the movement mechanism further comprises displacing the first section in a first direction and displacing the second section in a direction opposite to the first direction, at a first velocity. In another example, operating the movement mechanism further comprises displacing the first section and the second section in a reciprocating manner, wherein the first section is displaced in a first direction and the second section is displaced in a second direction, at a first velocity, for a first time period and the first section is displaced in the second direction and the second section is displaced in the first direction, at a second velocity , for a second time period, the second direction being opposite to the first direction. Accordingly, by varying the displacement motion of the sections, the amount and type of stress applied to the bond between the build plate and the first object may be controlled to allow for effective separation of the two. The advantages of the previous method apply to current method and to the devices described herein. These aspects are further described in relation figures 1-8.

The following detailed description references the drawings, wherein:
Figure 1 illustrates an example build plate comprising a plurality of sections;
Figure 2 illustrates a plurality of section of an example build plate in a first configuration in part A and the plurality of sections of an example build plate in a second configuration in part B;
Figure 3 illustrates an example build plate with a scissors mechanism in a first configuration in part A and in a second configuration in part B;
Figure 4 illustrates an example build plate with a sliding mechanism in a first configuration in part A and in a second configuration in part B;
Figure 5 illustrates an example build plate with a cam mechanism in a first configuration in part A and in a second configuration in part B;
Figure 6 illustrates a plurality of sections of a build plate with one or more non-build zones;
Figure 7 illustrates an example additive manufacturing method; and
Figure 8 illustrates an example method of removing a first object from a build plate.

Figure 1 is a top view of a build plate 100 of an additive manufacturing apparatus. The build plate acts as a base and supports an object while the object is being printed or manufactured by the additive manufacturing apparatus. Additive manufacturing apparatus herein refers to any apparatus or device which is capable of manufacturing objects using one or more additive manufacturing techniques such as power bed fusion, material jetting, fused particle fabrication, etc. Additionally, additive manufacturing apparatus capable of using one or more print materials i.e. material used for developing the object. The print materials can include metal powders, metal filaments, plastic filaments, liquid plastic resins, etc.

The build plate comprises a plurality of sections (shown as section 110, section 120 and section 130 in figure 1, also referred to as segments or blocks or modules). Each section is adjacent to another section and one end of the section abuts an end of the adjacent section. For example, as shown in figure 1, the section 110 is adjacent to the section 120. Additionally, the end 115 of section 110 is capable of abutting an end 125 of the section 120. The sections may be made of a material which is capable of withstanding high temperatures without physical deformation. The sections accordingly can be made up of metal, ceramics, etc.

Additionally, the build plate 100 comprises a movement mechanism mechanically coupled to the plurality of sections. Each section is capable of being displaced in relation to its adjacent sections by the movement mechanism. Accordingly, the plurality of sections is capable of being in one of a first configuration and a second configuration. Configuration herein refers to a physical arrangement of the sections in a particular manner. This is further explained using figure 2.

Figure 2 shows a top view of a plurality of sections (shown in figure 2 as section 210 and 220) of an example build plate in a first configuration in part A and a top view of the plurality of sections (210, 220) of the example build plate in a second configuration in part B.

As shown in part A, the sections 210 and 220 are abutting each other (i.e. the first configuration). Accordingly, an area of the section 210 is in contact with section 220. This is illustrated in the figure as area 225 (shown with grading). By engaging the movement mechanism of the build plate, the section 210 is displaced away from the section 220 (shown using the arrows in the part B of the figure), causing a gap to develop between the two as shown in part B of the figure 2. This is the second configuration of the plurality of section wherein a gap is present between the two sections. Accordingly, in the second configuration there is no area of the section 210 (also known as first section) which is in contact or abutting the section 220 (also known as second section).

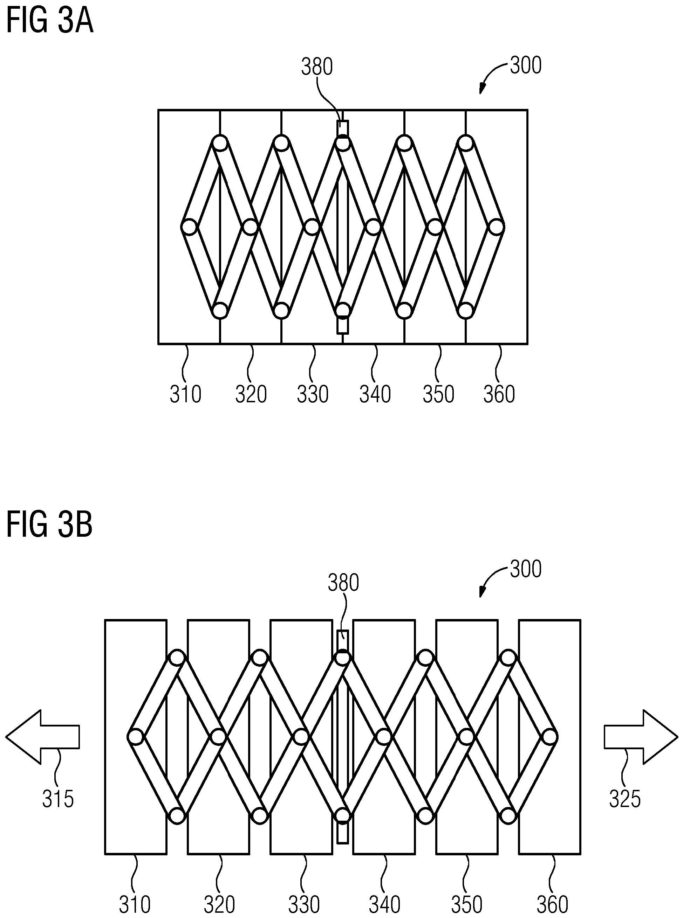

It may be noted that the first and second configurations illustrated in figure 2 are examples and other such configurations are possible along with a movement mechanism. This is further explained using figures 3-6.

Figure 3 shows bottom views of an example build plate 300 comprising a plurality of sections (310, 320, 330, 340, 350 and 360) with a scissors mechanism 380 in a first configuration in part A and in a second configuration in part B.

Similar to the figure 2, each section from the plurality of sections is abutting its adjacent section at one end in the first configuration. The scissors mechanism 380 is installed on a second surface of the build plate 300 which is opposite to the first surface on which the object is manufactured. The scissors mechanism 380 is connected to a motor which is capable of driving the scissors mechanism. As shown in the figure, the scissors mechanism is coupled to each section from the plurality of sections. In the first configuration, the scissors mechanism 380 is in a contracted state such that each section is abutting its adjacent section. Therefore, there is some area of every section which is in contact with its adjacent section. In the second configuration, the scissors mechanism is in an expanded state such that there is a gap created between each section and its adjacent section. Therefore, there is no area of any section which is in contact with its adjacent section. By operating the scissors mechanism (i.e. expanding or contracting), the plurality of sections are transitioned from the first configuration to the second configuration and vice versa.

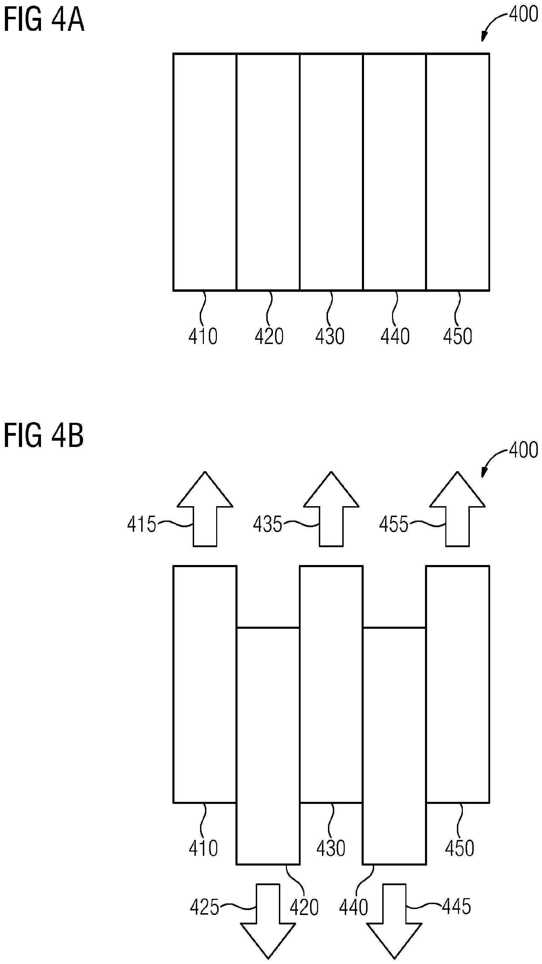

Figure 4 shows top views of an example build plate 400 including a plurality of sections (410, 420, 430, 440 and 450) with a sliding mechanism in a first configuration in part A and in a second configuration in part B.

Similar to the figure 2, each section from the plurality of sections is abutting its adjacent section at one end in the first configuration. The sliding mechanism (not shown in figures) is connected to a motor which is capable of driving the sliding mechanism. The sliding mechanism is coupled to each section from the plurality of sections. In the first configuration, the sliding mechanism is in a first state such that each section is abutting its adjacent section. Therefore, there is some area of every section which is in contact with its adjacent section. In the second configuration, the scissors mechanism is in a second state such that there is a degree of displacement created between each section and its adjacent section. Therefore, the area of abutment of each section with its adjacent section is less than in the first configuration. By operating the sliding mechanism, the plurality of sections are transitioned from the first configuration to the second configuration and vice versa. As shown in the figure, by operating the sliding mechanism, each section is displaced in a direction opposite to its adjacent sections, therefore creating a relative displacement between the two. For example, by engaging the sliding mechanism, sections 420 and 440 slide towards the direction indicated by arrows 425 and 445. Similarly, the sections 410 and 430 (adjacent sections of section 420) slide in a direction indicated by the arrows 415 and 435 (which are opposite to the arrow 425). Similarly, the sections 430 and 450 (adjacent sections of section 440) slide in a direction indicated by the arrows 435 and 455 (which are opposite to the arrow 445).

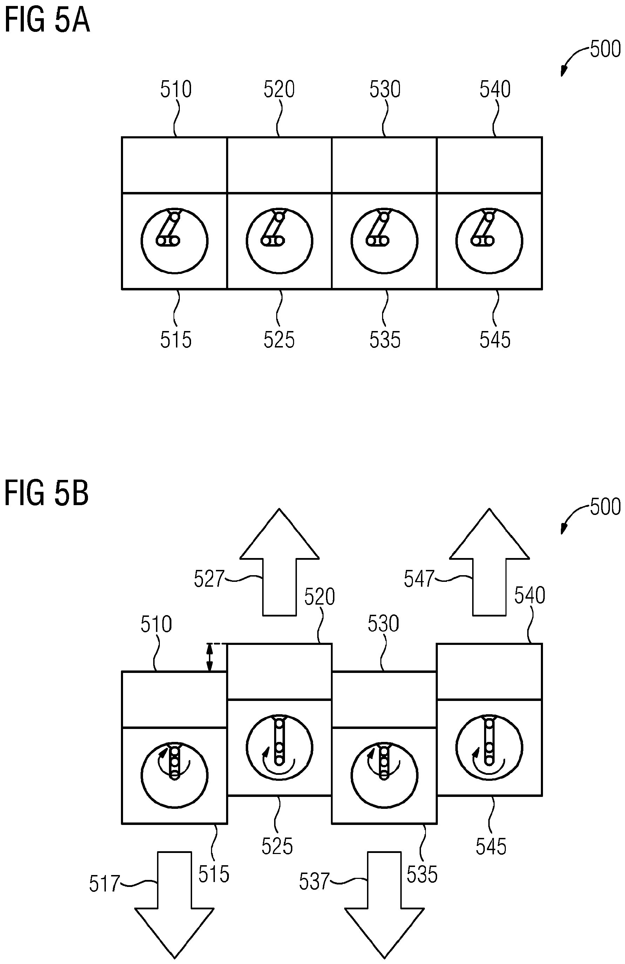

Figure 5 shows side views of an example build plate 500 including a plurality of sections (510, 520, 530, and 540) with a cam mechanism (515, 525, 535 and 545) in a first configuration in part A and in a second configuration in part B.

Similar to the figure 2, each section from the plurality of sections is abutting its adjacent section at one end in the first configuration. The cam mechanism comprises a plurality of cams (515, 525, 535 and 545), each cam mechanically coupled to a corresponding section from the plurality of sections. The cam mechanism is connected to a motor which is capable of driving the cam mechanism.

In the first configuration, the cams (515, 525, 535 and 545) are in a first state such that each section is abutting its adjacent section and the first surface of the build plate 500 is flat and level. Therefore, there is some area of every section which is in contact with its adjacent section. In the second configuration, the cams (515, 525, 535 and 545) are in a second state such that there is a degree of displacement created between each section and its adjacent section. Therefore, the area of abutment of each section with its adjacent section is less than in the first configuration. Additionally, the first surface of the build plate 500 is no longer flat or level. By operating the cam mechanism, the plurality of sections are transitioned from the first configuration to the second configuration and vice versa. As shown in the figure, by operating the cam mechanism, each section is displaced in a direction opposite to its adjacent sections, therefore creating a relative displacement between the two. For example, by engaging the cam mechanism, sections 520 and 540 are moved towards the direction indicated by arrows 527 and 547. Similarly, the sections 510 and 530 (adjacent sections of section 520) move in a direction indicated by the arrows 517 and 537 (which are opposite to the arrow 527).

It may be noted that one or more movement mechanisms are described above, other such movement mechanism as known may also be used. This may include telescopic mechanisms, wormhole, screw mechanisms, etc. Additionally, while the above figures show sections abutting other sections on one or two ends, sections may abut other sections on two or more ends as well. For example, a grid formation of sections is also possible, where one or more sections abut other sections on two or more ends. Additionally, while the above figures illustrate sections with rectangular geometry other shapes are possible for the sections.

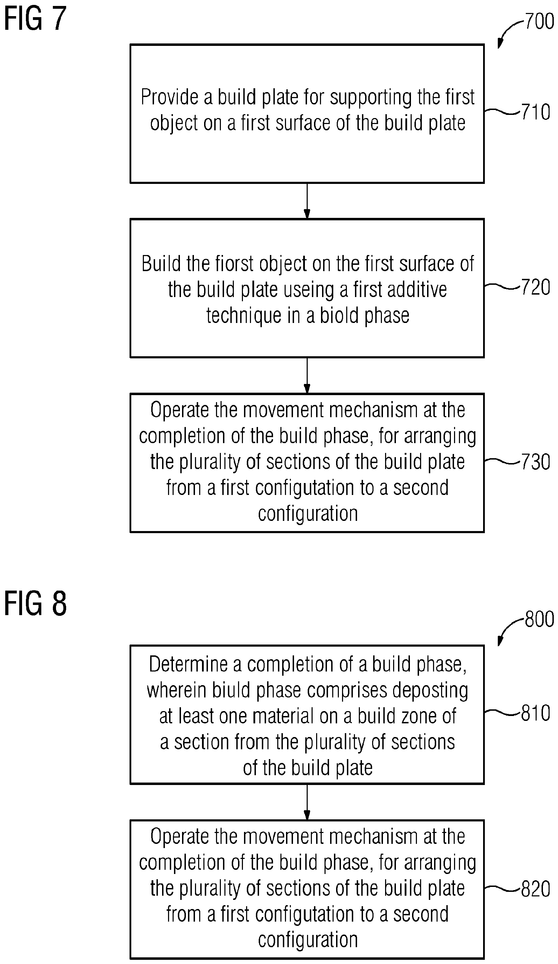

The operation of the movement mechanism and displacement of the plurality of sections is further explained in relation to figure 7 and 8.

Figure 7 illustrates an example additive manufacturing method 700 for manufacturing a first object. One or more steps of the method 700 may be realized using a controller associated with an additive manufacturing apparatus. At a step 710, a build plate for supporting the first object on a first surface of the build plate is provided. As mentioned above, the build plate comprises a plurality of sections and a movement mechanism mechanically coupled to the plurality of sections.

At step 720, the first object is built on the first surface of the build plate using a first additive technique in a build phase. During the build phase the plurality of sections are in the first configuration. The first object is built by depositing a one or more layers of at least one material on a build zone of a section from the plurality of sections of the build plate. Each section from the plurality of the sections comprises a build zone where print materials can be directly deposited on top of the build zone of the corresponding section.

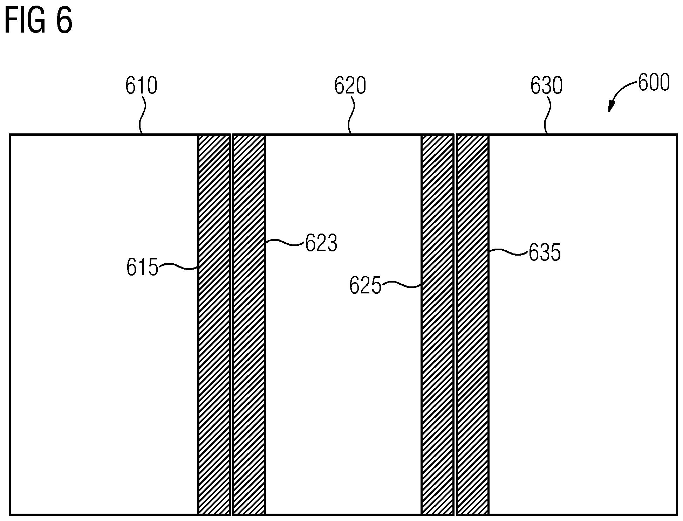

In an example, each section further comprises one or more non-build zones, where print materials are not directly deposited on top of the non-build zone of the section. This is further explained in relation to figure 6. Figure 6 shows a plurality of sections (610, 620, 630) of a build plate with one or more non-build zones (615, 623, 625, 635). Each section comprises one or more non-build zones (shown using graded areas in the section). For example, section 610 includes the non-build zone 615, section 620 includes non-build zones 623 and 625 and section 630 includes non-build zone 635.

Based on the temperature of the print material, properties of the print material, material properties of the sections of the build plate, there is a possibility of two adjacent sections fusing together at the junction of the adjacent sections. Accordingly, based on the temperature of the print material, properties of the print material, material properties of the sections of the build plate, the controller of the additive manufacturing apparatus determines one or more non-build zones. Each non-build zone is determined based on an end at which the corresponding section abuts an adjacent section and a predefined distance from the end. The remaining area on the section is treated as a build zone.

In an example, the method 700 further comprises simulating building the first object on the first surface of the build plate using a first model. Based on the simulation, the predefined distance for determining the non-build zone is determined. Using iterative simulations, a right value of the predefined distance can be chosen to ensure that the non-build zones are optimal. The first model herein refers to a physics-based model capable of simulating the thermal properties of the build plate and the first object.

Then, at step 730, the movement mechanism is operated at the completion of the build phase, for arranging the plurality of sections from the first configuration to a second configuration. As mentioned above, the plurality of sections are in the first configuration during the build phase. Then, upon completion of the build phase, for separating the first object from the build plate the plurality of sections are arranged from the first configuration to the second configuration. By displacing the section in relation to each other to transition to the second configuration, mechanical stress is introduced, and this causes the detachment of the first object from the build plate. This is further explained in relation to figure 8.

Figure 8 illustrates an example method 800 of removing a first object from a build plate of an additive manufacturing apparatus. As mentioned above, the build plate comprises a plurality of sections capable of being arranged in one of a first configuration and a second configuration, and a movement mechanism mechanically coupled to the plurality of sections. In an example, the method 800 is realized by a controller associated with the additive manufacturing apparatus. At step 810, the controller determines a completion of a build phase. Build phase refers to a time period during which one or more layers of at least one material are deposited on a build zone of a section from the plurality of sections of the build plate.

Then at step 820, the controller operates the movement mechanism at the completion of the build phase, for arranging the plurality of sections from the first configuration to the second configuration. The plurality of sections comprises a first section and a second section, an end of the first section abutting an end of the second section in the first configuration.

In an example, operating the movement mechanism further comprises displacing the first section in a first direction and displacing the second section in a direction opposite to the first direction, at a first velocity. For example, based on the print material and the geometry of the first object, the controller can control the movement mechanism to regulate the amount of stress generated and the type of stress generated by changing the velocity at which each section is displaced in relation to its adjacent sections.

In another example, the controller may operate the movement mechanism to enable oscillating or reciprocating motion amongst the plurality of the sections of the build plate. For example, operating the movement mechanism further comprises displacing the first section and the second section in a reciprocating manner, wherein the first section is displaced in a first direction and the second section is displaced in a second direction, at a first velocity, for a first time period and the first section is displaced in the second direction and the second section is displaced in the first direction, at a second velocity , for a second time period, the second direction being opposite to the first direction.

The first and second velocities, and the first and second time periods may be determined by the controller. Additionally, such operation may be repeated according to a particular frequency. Accordingly, by varying the displacement motion of the sections, the amount and type of stress applied to the bond between the build plate and the first object may be controlled to allow for effective separation of the two.

The methods of the present disclosure can take a form of a computer program product comprising program modules accessible from computer-usable or computer-readable medium storing program code for use by or in connection with one or more computers, processing units, or instruction execution system. For example, the methods 700 and 800 may be realized across one or more devices (for example programmable logic controllers, edge servers, etc.). For the purpose of this description, a computer-usable or computer-readable non-transitory storage medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processing units and program code for implementing each aspect of the technology can be centralized or distributed (or a combination thereof) as known to those skilled in the art.

While the current disclosure is described with references to few industrial devices, a plurality of industrial devices may be utilized in the context of the current disclosure. While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the various embodiments of the present disclosure, as described herein. The scope of the present disclosure is, therefore, indicated by the following claims rather than by the foregoing description. All changes, modifications, and variations coming within the meaning and range of equivalency of the claims are to be considered within their scope. All advantageous embodiments claimed in method claims may also be applied to device/non transitory storage medium claims.

## Claims

1. An additive manufacturing method (700) for manufacturing a first object, comprising:
a. Providing (710) a build plate (100) for supporting the first object on a first surface of the build plate, the build plate comprising a plurality of sections (110, 120, 130) and a movement mechanism mechanically coupled to the plurality of sections (110, 120, 130), wherein the plurality of sections are in a first configuration during a build phase;
b. Building (720) the first object on the first surface of the build plate (100) using a first additive technique in a build phase, wherein building the first object comprises depositing at least one material on a build zone of a section from the plurality of sections of the build plate; and
c. Operating (730) the movement mechanism at the completion of the build phase, for arranging the plurality of sections (110, 120, 130) from the first configuration to a second configuration.

2. The additive manufacturing method (700) as claimed in claim 1, wherein the plurality of sections (110,120, 130) comprises a first section (110) and a second section (120), a first end (115) of the first section (110) abutting a second end (125) of the second section (120) in the first configuration and wherein an area of the first section (110) abutting the second section (120) in the first configuration is greater than an area of the first section (110) abutting the second section (120) in the second configuration.

3. The additive manufacturing method (700) as claimed in claim 1, wherein the plurality of sections (110, 120, 130) comprises a first section (110) and a second section (120), a first end (115) of the first section (110) abutting a second end (125) of the second section (120) and wherein the movement mechanism is capable of arranging the first and second sections (110, 120) from the first configuration to the second configuration by displacing the first section (110) in a first direction and by displacing the second section (120) in a direction opposite to the first direction.

4. The additive manufacturing method (700) as claimed in claim 1, wherein each section from the plurality of sections (610, 620, 620) comprises the build zone and one or more non-build zones (615, 623, 625, 635), wherein the each non-build zone from the one or more non-build zones (615, 623, 625, 635), is adjacent to a neighbouring section abutting the section.

5. The additive manufacturing method (700) as claimed in claim 1, wherein the movement mechanism is one of a scissors mechanism, telescopic mechanism, sliding mechanism and a cam mechanism.

6. The additive manufacturing method (700) as claimed in claim 4, wherein additive manufacturing method (700) further comprises simulating a building of the first object on the first surface of the build plate using a first model, for determining at least one non-build zone from the one or more non-build zones (615, 623, 625, 635) .

7. An additive manufacturing apparatus, comprising:
a. a build plate (100) for supporting one or more objects on a first surface, the build plate comprising:
i. a plurality of sections (110, 120, 130) capable of being arranged in one of a first configuration and a second configuration, the plurality of sections (110, 120, 130) comprising a first section (110) and a second section (120), an end (115) of the first section (110) abutting an end (125) of the second section (120); and
ii. a movement mechanism mechanically coupled to the plurality of sections (110, 120, 130), for arranging the plurality of section (110, 120, 130) in one of the first configuration and the second configuration;
wherein an area (225) of the first section (110) abutting the second section (120) in the first configuration is greater than an area of the first section (110) abutting the second section (120) in the second configuration.

8. The additive manufacturing apparatus as claimed in claim 7, wherein the movement mechanism is capable of arranging the first and second sections (110, 120) from the first configuration to the second configuration by displacing the first section (110) in a first direction and by displacing the second section (120) in a direction opposite to the first direction.

9. The additive manufacturing apparatus as claimed in claim 7, wherein the movement mechanism is one of a scissors mechanism, telescopic mechanism, sliding mechanism, and a cam mechanism.

10. A build plate (100), the build plate (100) comprising:
i. a plurality of sections (110, 120, 130) capable of being arranged in one of a first configuration and a second configuration, the plurality of sections (110, 120, 130) comprising a first section (110) and a second section (120), an end (115) of the first section (110) abutting an end (125) of the second section (120); and
ii. a movement mechanism mechanically coupled to the plurality of sections (110, 120, 130), for arranging the plurality of section (110, 120, 130) in one of the first configuration and the second configuration;
wherein an area (225) of the first section (110) abutting the second section (120) in the first configuration is greater than an area of the first section (110) abutting the second section (120) in the second configuration.

11. A method (800) of removing a first object from a build plate (100) of an additive manufacturing apparatus, the build plate (100) comprising a plurality of sections (110, 120, 130) capable of being arranged in one of a first configuration and a second configuration, and a movement mechanism mechanically coupled to the plurality of sections (110, 120, 130), the method (800) comprising:
a. Determining (810) a completion of a build phase, wherein build phase comprises depositing at least one material on a build zone of a section from the plurality of sections (110, 120, 130) of the build plate (100);
b. Operating (820) the movement mechanism at the completion of the build phase, for arranging the plurality of sections (110, 120, 130) from the first configuration to the second configuration;
wherein the plurality of sections comprising a first section (110) and a second section (120), an end (115) of the first section (110) abutting an end (125) of the second section (120).

12. The method (800) as claimed in claim 11, wherein operating the movement mechanism further comprises displacing the first section (110) in a first direction and displacing the second section (120) in a direction opposite to the first direction, at a first velocity.

13. The method (800) as claimed in claim 11, wherein operating the movement mechanism further comprises displacing the first section (110) and the second section (120) in a reciprocating manner, wherein the first section (110) is displaced in a first direction and the second section (120) is displaced in a second direction, at a first velocity, for a first time period and the first section (110) is displaced in the second direction and the second section (120) is displaced in the first direction, at a second velocity , for a second time period, the second direction being opposite to the first direction.
